# EUROPÄISCHE PATENTSCHRIFT

(11) **EP 2 732 486 B1**
(45) Veröffentlichungstag und Bekanntmachung des Hinweises auf die Patenterteilung: **03.05.2017**
(21) Anmeldenummer: 12727314.2
(22) Anmeldetag: 08.06.2012
(51) Int. Cl.: H01M 2/10, H01M 10/04, B60L 11/18, B60K 1/04

(54) **ENERGIESPEICHERMODUL UND BEFESTIGUNGSANORDNUNG MIT DEM ENERGIESPEICHERMODUL**
ENERGY STORAGE MODULE AND FIXING ASSEMBLY COMPRISING THE ENERGY STORAGE MODULE
MODULE DE STOCKAGE D'ÉNERGIE ET DISPOSITIF DE FIXATION COMPRENANT LEDIT MODULE DE STOCKAGE D'ÉNERGIE

(30) Priorität: 12.07.2011 DE 102011078983
(43) Veröffentlichungstag der Anmeldung: 21.05.2014
(73) Patentinhaber: Bayerische Motoren Werke Aktiengesellschaft, 80809 München (DE)
(72) Erfinder: GOESMANN, Hubertus, 89564 Nattheim-Auernheim (DE)
(86) Internationale Anmeldenummer: PCT/EP2012/002431
(87) Internationale Veröffentlichungsnummer: WO 2013/007333

(56) Entgegenhaltungen:
- EP-A1- 0 771 037
- EP-A1- 2 277 820
- WO-A1-2011/013767
- DE-U1-202009 015 277
- FR-A1- 2 808 123
- FR-A3- 2 943 970
- TW-A- 200 944 404

## Beschreibung

Die Erfindung betrifft ein Energiespeichermodul für eine Vorrichtung zur Spannungsversorgung, insbesondere eines Kraftfahrzeugs, aus mehreren Speicherzellen, die zwischen zwei Endplatten über Zuganker verspannt sind. Die Erfindung betrifft ferner eine Befestigungsanordnung für das Energiespeichermodul.

In einer üblicherweise als Batterie bezeichneten Vorrichtung zur Spannungsversorgung eines Kraftfahrzeugs kommt meist eine Mehrzahl an Energiespeichermodulen zum Antrieb des Fahrzeugs, beispielsweise von Elektrofahrzeugen oder Hybridfahrzeugen, zum Einsatz. Ein jeweiliges Energiespeichermodul besteht typischerweise aus mehreren gestapelten prismatischen Speicherzellen. Die einzelnen Speicherzellen enthalten elektrochemische Zellen der Batterie. Der Stapel aus den einzelnen Speicherzellen wird zumeist über eine mechanische Endplatte und Zuganker zu dem Energiespeichermodul verspannt. Die Endplatten und Zuganker dienen neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken.

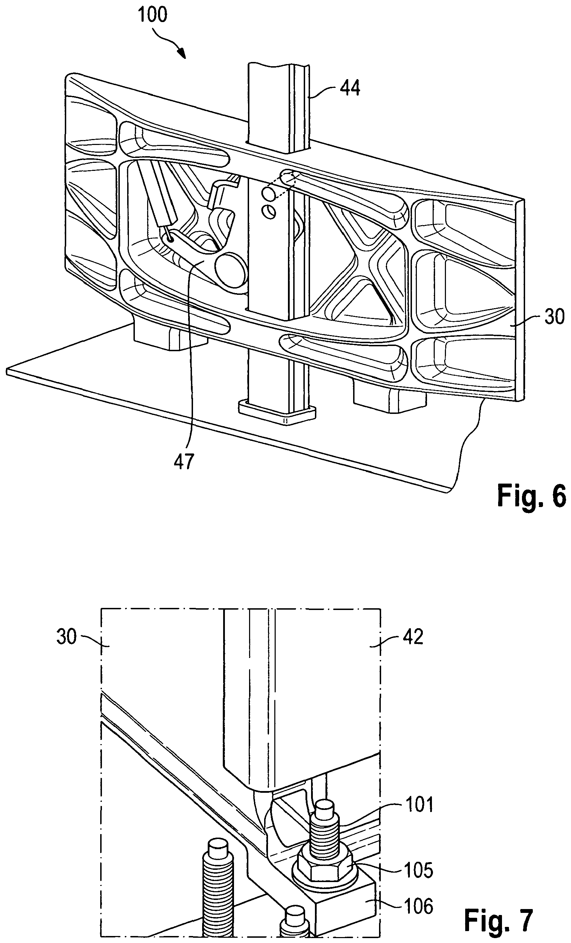

Die Energiespeichermodule werden in Vorrichtungen zur Spannungsversorgung, insbesondere in Kraftfahrzeugen, montiert. Dies geschieht üblicherweise mit einem Befestigungsmittel, beispielsweise einem Bolzen. Zur Verbindung zwischen Bolzen und Energiespeichermodul sind bisher Fortsätze am Energiespeichermodul vorgesehen. Durch diese Fortsätze wird das Befestigungsmittel gesteckt und kann somit beispielsweise im Kraftfahrzeug montiert werden. Diese Fortsätze ragen über das Energiespeichermodul hinaus und erhöhen somit in ungünstiger Weise den Bauraum des Energiespeichermoduls. Ferner ist diese Befestigungsmethode mit Bolzen und Muttern aufwendig in der Montage. Figur 7 zeigt eine nicht erfindungsgemäße Verschraubung eines Energiespeichermoduls. Wie hier dargestellt ist, ragt bei dieser herkömmlichen Methode ein Fortsatz 106 über die Endplatte 30 hinaus. In diesem Fortsatz 106 steckt ein Bolzen 101 als Befestigungsmittel. Dieser Bolzen 101 ist mittels der Verschraubung 105 fixiert.

Beispielweise offenbart die FR 2 943 970 A3 ein Energiespeichermodul aus dem Stand der Technik. Es ist Aufgabe der vorliegenden Erfindung, ein Energiespeichermodul für eine Vorrichtung zur Spannungsversorgung anzugeben, das auf einfache Weise herstellbar ist und bei möglichst kleinem Bauraum einfach und sicher befestigt werden kann. Ferner ist es Aufgabe vorliegender Erfindung, eine entsprechende Befestigungsanordnung für das Energiespeichermodul anzugeben.
Die Aufgabe wird gelöst durch die Merkmalskombinationen der unabhängigen Ansprüche. Die abhängigen Ansprüche zeigen vorteilhafte Ausgestaltungen der Erfindung.
Somit wird die Aufgabe gelöst durch ein Energiespeichermodul für eine Vorrichtung zur Spannungsversorgung, insbesondere eines Kraftfahrzeugs, aus mehreren Speicherzellen, die zwischen zwei Endplatten über Zuganker verspannt sind, wobei das Energiespeichermodul zum Aufstecken und Verriegeln auf zumindest einen festen Verriegelungsbügel ausgebildet ist, wobei zumindest eine der beiden Endplatten ein mit der Endplatte schwenkbar und/oder verschiebbar verbundenes Verriegelungselement umfasst, und wobei mittels schwenk- und/oder verschiebbarer Bewegung des Verriegelungselementes das Verriegelungselement mit dem Verriegelungsbügel verriegelbar ist.
Dank dem erfindungsgemäßen Verriegelungselement kann das Energiespeichermodul auf einfachste Weise, beispielsweise in einer Fahrzeugkarosserie, fixiert werden. Die Verriegelungsbügel ragen bevorzugt vertikal aus der Karosserie heraus. Die Energiespeichermodule können somit von oben auf die Verriegelungsbügel aufgesteckt werden. Mit nur einem Handgriff werden die Verriegelungselemente verschwenkt und/oder verschoben, wodurch eine kraft- und/oder formschlüssige Verbindung zwischen den Endplatten und den Verriegelungsbügeln entsteht. In bevorzugter Ausführung ist an jeder der beiden Endplatten jeweils ein Verriegelungselement vorgesehen. In entsprechender Weise gibt es dann für jede der beiden Endplatten einen Verriegelungsbügel. Durch den Wegfall der Verschraubung reduziert sich so der Montageaufwand erheblich.

In vorteilhafter Ausbildung ist vorgesehen, dass das Verriegelungselement eine Klemmfläche umfasst. Insbesondere ist die Klemmfläche derart angeordnet, dass sie nach dem Verschwenken oder Verschieben unter einen Verriegelungsfortsatz am Verriegelungsbügel klemmt. Insbesondere ist dieser Verriegelungsfortsatz als Verriegelungsbolzen ausgebildet. Diese Klemmung unter einem Verriegelungsfortsatz ermöglicht insbesondere eine selbsthemmende und/oder spielfreie Verriegelung.

Des Weiteren ist vorteilhafterweise vorgesehen, dass zwischen dem Verriegelungselement und der Endplatte eine Feder angeordnet ist. Die Feder belastet das Verriegelungselement in Richtung der Verriegelungsbewegung. Insbesondere ist das Verriegelungselement so angeordnet, dass nach dem Aufstecken des Energiespeichermoduls auf die Verriegelungsbügel das Verriegelungselement mit Hilfe der Federkraft zuschnappt. Insbesondere kommt hier eine Zugfeder zur Anwendung.

Darüber hinaus ist vorteilhafterweise vorgesehen, dass die Endplatte zumindest eine Ausnehmung zum Einführen des Verriegelungsbügels umfasst. Durch diese Ausnehmung entsteht eine formschlüssige Verbindung zwischen Verriegelungsbügel und Energiespeichermodul bzw. Endplatte. Insbesondere ist die Ausnehmung oder sind die mehreren Ausnehmungen als Durchgangslöcher ausgebildet. Der Verriegelungsbügel, welcher im Durchgangsloch sitzt, verhindert ein Verschieben des Energiespeichermoduls in alle Richtungen senkrecht zum Verriegelungsbügel. Insbesondere sind am oberen und am unteren Ende der Endplatte jeweils eine Ausnehmung, insbesondere ein Durchgangsloch, vorgesehen.

In besonders bevorzugter Ausführung ist die Endplatte zweischalig ausgebildet. Das Verriegelungselement befindet sich dabei zwischen den beiden Schalen. Im montierten Zustand erstreckt sich auch bevorzugt der Befestigungsbügel zumindest teilweise zwischen den beiden Schalen. Insbesondere führt die Ausnehmung bzw. das Durchgangsloch von außen in einen Zwischenraum zwischen den beiden Schalen hinein. Alternativ ist die Endplatte als Alu-Druckgussteil ausgebildet.

Ferner ist bevorzugt das Verriegelungselement als Exzenter ausgebildet. Besonders bevorzugt ist der Exzenter über eine Drehachse mit der Endplatte rotierbar verbunden. Die Drehachse ist bevorzugt parallel zur Zugrichtung der Zuganker angeordnet. Bei Verwendung der oben beschriebenen Zugfeder greift die Zugfeder am Exzenter auf einer Seite der Drehachse an. Die Klemmfläche ist auf der anderen Seite der Drehachse am Exzenter ausgebildet. Dadurch kann unter anderem eine Selbsthemmung der Klemmung erreicht werden.

Die Erfindung umfasst des Weiteren eine Befestigungsanordnung umfassend zumindest eines der soeben beschriebenen Energiespeichermodule und zumindest einen Verriegelungsbügel zum Aufstecken des Energiespeichermoduls. Die im Rahmen des erfindungsgemäßen Energiespeichermoduls beschriebenen vorteilhaften Ausgestaltungen finden entsprechend vorteilhafte Anwendung für die erfindungsgemäße Befestigungsanordnung.

Insbesondere ist vorgesehen, dass der Verriegelungsbügel an einem Ende fest mit einer Vorrichtung, insbesondere einem Gehäuse oder einer Fahrzeugkarosserie, verbunden ist. Das Verriegelungselement ist dabei so angeordnet, dass die Klemmfläche des Verriegelungselementes eine dem festen Ende zugewandte Fläche des Verriegelungsbügels untergreift. Insbesondere untergreift die Klemmfläche diejenige Seite eines Verriegelungsfortsatzes oder Verriegelungsbolzens, die dem festen Ende des Verriegelungsbügels zugeordnet ist. Das Energiespeichermodul sitzt im montierten Zustand bevorzugt mit seiner Unterseite auf dem Gehäuse oder der Fahrzeugkarosserie auf. Somit ist eine weitere Bewegung des Energiespeichermoduls nach unten blockiert. Die Klemmfläche im Zusammenspiel mit dem Verriegelungsbügel, insbesondere dem Verriegelungsfortsatz, verhindert ein Anheben des Energiespeichermoduls in einer Richtung parallel zum Verriegelungsbügel. Ferner ist durch diese Anordnung der Klemmfläche eine selbsthemmende und spielfreie Verriegelung möglich. Der Verriegelungsfortsatz bzw. der Verriegelungsbolzen erstrecken sich bevorzugt senkrecht zum Verriegelungsbügel und/oder parallel zur Horizontalen.

Darüber hinaus ist bevorzugt vorgesehen, dass das Verriegelungselement und der Verriegelungsbügel, insbesondere der Verriegelungsfortsatz, für eine selbsthemmende Klemmung ausgebildet sind. Die selbsthemmende Klemmung ist zum Einen dadurch unterstützt, dass die Klemmfläche die dem festen Ende des Verriegelungsbügels zugewandte Fläche des Verriegelungsfortsatzes untergreift. Zum Anderen wird die Selbsthemmung bei einem Exzenter durch die geometrische Ausbildung der Klemmfläche und durch die Anordnung der Drehachse des Exzenters realisiert.

Darüber hinaus ist vorteilhafterweise vorgesehen, dass der Verriegelungsbügel zum Aufstecken von mehreren, übereinander gestapelten Energiespeichermodulen ausgebildet ist. Hierzu ist der Verriegelungsbügel länger als eine Höhe eines Energiespeichermoduls ausgeführt. Ferner umfasst der Verriegelungsbügel hierzu bevorzugt mehrere, übereinander angeordnete Verriegelungsfortsätze. Zwischen den übereinander gestapelten Energiespeichermodulen kann bevorzugt ein Zwischenboden auf die Verriegelungsbügel aufgesteckt werden. Die Zwischenböden umfassen dann, ähnlich wie die Endplatten, ebenfalls Ausnehmungen oder Durchgangslöcher zum Einstecken der Verriegelungsbügel.

Der Verriegelungsbügel ist insbesondere als eine gerade Stange bzw. Platte ausgebildet oder umfasst zwei parallele, beabstandete Platten.

Die Erfindung wird nachfolgend anhand der Zeichnung näher erläutert. Dabei zeigt:
- Figur 1: Speicherzellen des erfindungsgemäßen Energiespeichermoduls gemäß allen Ausführungsbeispielen,
- Figur 2: das erfindungsgemäße Energiespeichermodul gemäß einem ersten Ausführungsbeispiel, voll bestückt mit Speicherzellen,
- Figur 3: eine Detailansicht der erfindungsgemäßen Befestigungsanordnung gemäß einem zweiten Ausführungsbeispiel,
- Figur 4: eine Detailansicht der erfindungsgemäßen Befestigungsanordnung nach einem dritten Ausführungsbeispiel,
- Figur 5: eine Detailansicht der erfindungsgemäßen Befestigungsanordnung nach einem vierten Ausführungsbeispiel,
- Figur 6: eine Detailansicht der erfindungsgemäßen Befestigungsanordnung nach einem fünften Ausführungsbeispiel, und
- Figur 7: eine herkömmliche, nicht erfindungsgemäße Verschraubung eines Energiespeichermoduls.

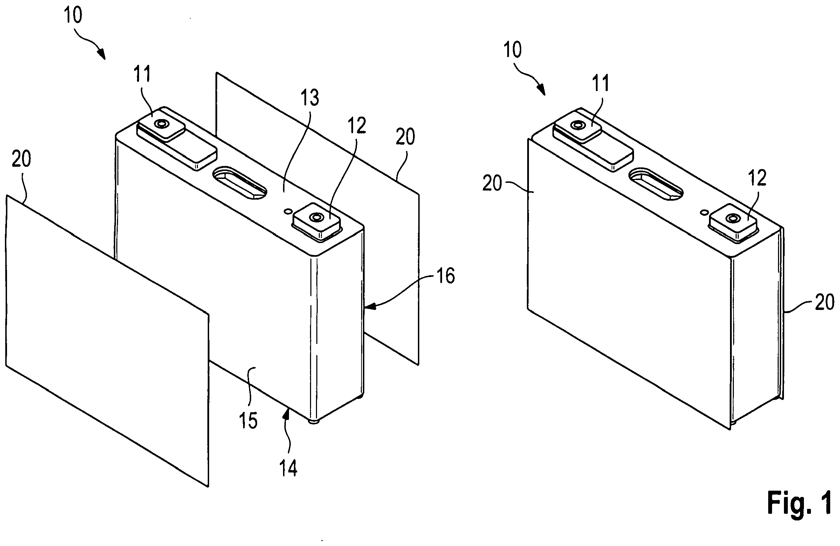

Im Folgenden wird die Erfindung anhand der Figuren 1 bis 6 genauer erläutert. Figur 7 zeigt eine herkömmliche, nicht erfindungsgemäße Verschraubung eines Energiespeichermoduls.

In Figur 1 ist eine einzelne prismatische Speicherzelle 10 eines in seiner Gesamtheit später dargestellten Energiespeichermoduls 1 in perspektivischer Darstellung zu sehen. Die Speicherzelle 10 besteht typischerweise aus einer oder mehreren einzelnen elektrochemischen Zellen, welche in der hier gewählten Darstellung im Inneren der Speicherzelle 10 im Verborgenen liegen. Auf einer Vorderseite 13 weist die Speicherzelle 10 ein Anschlussterminal 11 erster Polarität und ein Anschlussterminal 12 zweiter Polarität auf. Auf der in der Figur nicht dargestellten Rückseite 14 der Speicherzelle 10 sind keine Anschlussterminals vorgesehen. Eines der Anschlussterminals 11, 12, typischerweise der Plus-Pol der Speicherzelle, kann elektrisch mit einem Gehäuse der Speicherzelle 10 verbunden sein. Da in dem erfindungsgemäßen Energiespeichermodul 1 mehrere der Speicherzellen 10 zumindest in einer Reihe gestapelt hintereinander angeordnet werden, werden zumindest gegenüberliegende Hauptflächen 15, 16 mit einem elektrisch isolierenden Material versehen. In dem in Figur 1 dargestellten Ausführungsbeispiel wird eine Klebefolie 20 auf die Hauptflächen 15, 16 aufgebracht.

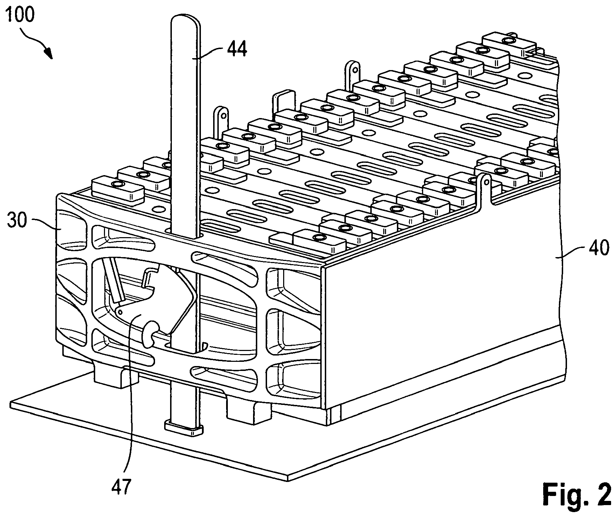

Bei dem erfindungsgemäßen Energiespeichermodul gemäß Figur 2 werden die Speicherzellen 10 in beispielhaft eine Speicherzellen-Reihe angeordnet. Die Verspannung der zu einer Reihe gestapelten Speicherzellen erfolgt unter Verwendung von Endplatten 30 und Zugankern 40, 42. Eine zweite, nicht dargestellte Endplatte befindet sich gegenüber der dargestellten Endplatte 30. Die Endplatten werden auch als Druckplatten bezeichnet.

In Fig. 2 sind die Endplatten gemäß dem ersten Ausführungsbeispiel als Alu-Druckgussplatten ausgebildet. Innerhalb der Endplatte 30 ist ein Verriegelungselement 47 vorgesehen. Zur Befestigung des Energiespeichermoduls 1 wird selbiges auf Verriegelungsbügel 44 aufgesteckt. Das Verriegelungselement 47 wirkt dann zur Befestigung des Energiespeichermoduls 1 mit dem Verriegelungsbügel 44 zusammen. Der genaue Aufbau der Verriegelung wird in den folgenden Figuren genauer erläutert.

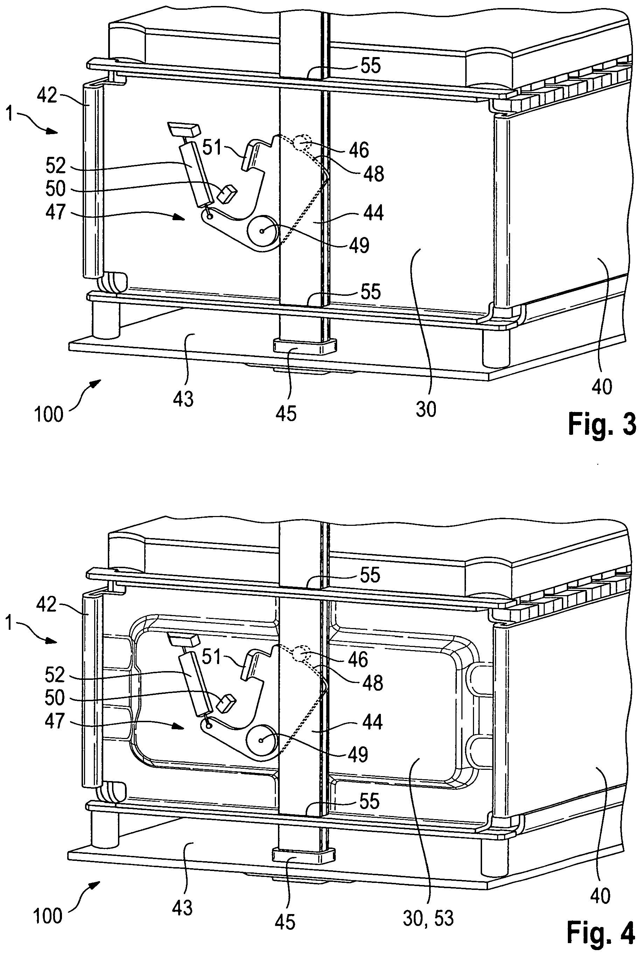

Anhand der Figur 3 wird ein zweites Ausführungsbeispiel einer erfindungsgemäßen Befestigungsanordnung 100 erläutert. Gleich bzw. funktional gleiche Bauteile sind in allen Ausführungsbeispielen mit den selben Bezugszeichen versehen. Zu sehen ist die Endplatte 30 als Stanzbiegeteil des Energiespeichermoduls 1 sowie zwei Zuganker 40, 42. Das Energiespeichermodul 1 steht auf einem Gehäuse bzw. einer Karosserie 43.

Von der Karosserie 43 erstreckt sich senkrecht nach oben der Verriegelungsbügel 44. Der Verriegelungsbügel 44 ist mit seinem unteren, festen Ende 45 mit der Karosserie 43 verbunden. Von dem Verriegelungsbügel 44 steht ein Verriegelungsfortsatz, ausgebildet als Verriegelungsbolzen 46, senkrecht hervor. Der Verriegelungsbolzen 46 erstreckt sich in der Zugrichtung der Zuganker 40 bis 42.

Auf den Verriegelungsbügel 44 ist das Energiespeichermodul 1 aufgesetzt. Der Verriegelungsbügel 44 durchgreift dabei die Endplatte 30. In entsprechender Weise befindet sich auf der gegenüberliegenden Seite des Energiespeichermoduls 1 ein Verriegelungsbügel 44, welcher die andere Endplatte 35 durchgreift.

Die Endplatte 30 weist zwei Ausnehmungen, ausgebildet als Durchgangslöcher 55 auf. Die beiden Durchgangslöcher 55 befinden sich am oberen und unteren Ende der Endplatte 30. Durch diese Durchgangslöcher 55 erstreckt sich der Verriegelungsbügel 44.

An der Endplatte 30 ist das Verriegelungselement, ausgebildet als Exzenter 47 angebracht. Der Exzenter 47 umfasst eine Klemmfläche 48 und ist mittels einer Drehachse 49 mit der Endplatte 30 rotierbar verbunden. Die Drehachse 49 erstreckt sich parallel zur Zugrichtung der Zuganker 40 bis 42. Gezeigt ist der verriegelte Zustand des Energiespeichermoduls 1. Hier befindet sich die bogenförmig ausgebildete Klemmfläche 48 unter dem Verriegelungsbolzen 46. Des Weiteren ist eine Zugfeder 52 angeordnet. Ein Ende der Zugfeder 52 ist fest mit der Endplatte 30 verbunden. Das andere Ende der Zugfeder 52 greift am Exzenter 47 an. Die Zugfeder 42 belastet den Exzenter 47 derart, dass die Klemmfläche 48 gegen den Verriegelungsbolzen 46 gedrückt wird. Darüber hinaus befindet sich ein Griff 51 am Exzenter 47. Bevor das Energiespeichermodul 1 auf den Verriegelungsbügel 44 aufgesetzt wird, zieht der Monteur am Griff 51. Dadurch wird die Zugfeder 52 auf Zug belastet und die Klemmfläche 48 schwenkt nach links. Sobald das Energiespeichermodul 1 auf den Verriegelungsbügel 44 aufgesteckt ist, lässt der Monteur den Griff 51 los und die Zugfeder 52 schwenkt die Klemmfläche 48 nach rechts. Dadurch entsteht die Klemmung zwischen Klemmfläche 48 und Verriegelungsbolzen 46. Um ein Überdehnen der Zugfeder 52 zu verhindern ist ein Anschlag 50 auf der Endplatte 30 vorgesehen.

Figur 4 zeigt ein drittes Ausführungsbeispiel der erfindungsgemäßen Befestigungsvorrichtung 100. Gleiche bzw. funktional gleiche Bauteile sind in allen Ausführungsbeispielen mit den gleichen Bezugszeichen versehen. Im dritten Ausführungsbeispiel ist die Endplatte 30 (genauso auch die gegenüberliegende Endplatte 35) zweischalig aufgebaut. Zu sehen ist in Figur 4 eine Oberschale 53 der Endplatte 30. Die entsprechende Unterschale ist hier nicht zu sehen. Die Unterschale befindet sich parallel zur Oberschale 53 auf der Innenseite. Beispielhaft ist die Innenschale so ausgebildet wie die Endplatte 30 in Figur 3.

In Figur 4 ist ein Teil der Oberschale 53 durchsichtig gezeichnet, so dass der Verriegelungsmechanismus sichtbar ist. Zwischen der Oberschale 53 und der Unterschale ist ein Hohlraum ausgebildet. In diesem Hohlraum ist der Verriegelungsmechanismus angeordnet. Insbesondere führen die beiden Durchgangslöcher 55 in diesen Hohlraum hinein, so dass der Verriegelungsbügel 44 durch den Hohlraum hindurchsteckbar ist.

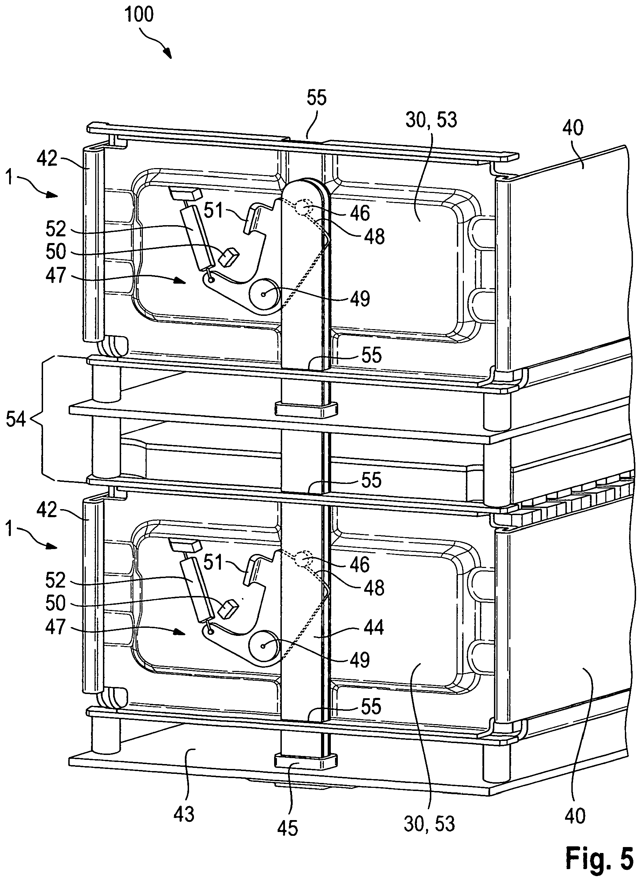

Figur 5 zeigt ein viertes Ausführungsbeispiel der erfindungsgemäßen Befestigungsvorrichtung 100. Gleiche bzw. funktional gleiche Bauteile sind in allen Ausführungsbeispielen mit denselben Bezugszeichen versehen. In Figur 5 sind zwei der Energiespeichermodule 1 mit zweischaligen Endplatten 30, 35 übereinander auf einem Verriegelungsbügel 44 angeordnet. Hierzu ist der Verriegelungsbügel 44 länger ausgeführt und umfasst zwei Verriegelungsbolzen 46. Zwischen den beiden Energiespeichermodulen 1 befindet sich ein Zwischenboden 54. Auch der Zwischenboden 54 umfasst Durchgangslöcher 55, so dass der Zwischenboden 54 ebenfalls auf die Verriegelungsbügel 44 aufsteckbar ist.

Figur 6 zeigt ein fünftes Ausführungsbeispiel der erfindungsgemäßen Befestigungsvorrichtung 100. Gleiche bzw. funktional gleiche Bauteile sind in allen Ausführungsbeispielen mit denselben Bezugszeichen versehen. Genauso wie im ersten Ausführungsbeispiel ist auch hier im fünften Ausführungsbeispiel die Endplatte 30 als Alu-Druckgussteil ausgebildet. Allerdings umfasst hier, wie auch in den Ausführungsbeispielen 2 bis 4, der Verriegelungsbügel 44 zwei beabstandete, parallel gegenüberliegende, sich längs erstreckende Platten. Zwischen diesen beiden Platten des Verriegelungsbügels 44 erstreckt sich der Verriegelungsbolzen 46. Infolgedessen greift auch der Exzenter 47 zwischen diese zwei sich längs erstreckenden Platten ein.

### Bezugszeichenliste

- 1: Energiespeichermodul
- 10: Speicherzelle
- 11: Anschlussterminal erster Polarität
- 12: Anschlussterminal zweiter Polarität
- 13: Vorderseite
- 14: Rückseite
- 15: Hauptfläche
- 16: Hauptfläche
- 20: Klebefolie
- 30: Endplatte
- 35: Endplatte
- 40: Zuganker
- 42: Zuganker
- 43: Gehäuse / Karosserie
- 44: Verriegelungsbügel
- 45: Festes Ende
- 46: Verriegelungsfortsatz / Verriegelungsbolzen
- 47: Verriegelungselement / Exzenter
- 48: Klemmfläche
- 49: Drehachse
- 50: Anschlag
- 51: Griff
- 52: Zugfeder
- 53: Oberschale
- 54: Zwischenboden
- 55: Ausnehmung
- 100: Befestigungsvorrichtung
- 101: Bolzen
- 105: Schraubverbindung
- 106: Fortsatz

## Patentansprüche

1. Energiespeichermodul (1) für eine Vorrichtung zur Spannungsversorgung, insbesondere eines Kraftfahrzeugs, aus mehreren Speicherzellen (10), die zwischen zwei Endplatten (30, 35) über Zuganker (40-42) verspannt sind,
wobei das Energiespeichermodul (1) zum Aufstecken und Verriegeln auf zumindest einen festen Verriegelungsbügel (44) ausgebildet ist, wobei zumindest eine der beiden Endplatten (30, 35) ein mit der Endplatte (30, 35) schwenkbar und/oder verschiebbar verbundenes Verriegelungselement (47) umfasst, und
wobei mittels schwenk- und/oder verschiebbarer Bewegung des Verriegelungselementes (47) das Verriegelungselement (47) mit dem Verriegelungsbügel (44) verriegelbar ist.

2. Energiespeichermodul nach Anspruch 1, **dadurch gekennzeichnet, dass** das Verriegelungselement (47) eine Klemmfläche (48) umfasst, wobei die Klemmfläche (48) unter einen Verriegelungsfortsatz (46), insbesondere Verriegelungsbolzen, am Verriegelungsbügel (44) schwenk- und/oder verschiebbar ist.

3. Energiespeichermodul nach einem der vorhergehenden Ansprüche, **gekennzeichnet durch** eine Feder (52) zwischen dem Verriegelungselement (47) und der Endplatte (30, 35), wobei die Feder (52) angeordnet ist, um die schwenk- und/oder verschiebbare Bewegung des Verriegelungselementes (47) zum Verriegeln mit dem Verriegelungsbügel (44) zu unterstützen.

4. Energiespeichermodul nach einem der vorhergehenden Ansprüche, **dadurch gekennzeichnet, dass** die Endplatte (30, 35) zumindest eine Ausnehmung (55), insbesondere zumindest ein Durchgangsloch, zum Einführen des Verriegelungsbügels (44) umfasst.

5. Energiespeichermodul nach einem der vorhergehenden Ansprüche, **dadurch gekennzeichnet, dass** die Endplatte (30, 35) aus zwei Schalen (53) gebildet ist, wobei das Verriegelungselement (47) zwischen den beiden Schalen (53) angeordnet ist.

6. Energiespeichermodul nach einem der vorhergehenden Ansprüche, **dadurch gekennzeichnet, dass** das Verriegelungselement (47) als Exzenter ausgebildet ist.

7. Energiespeichermodul nach Anspruch 6, **dadurch gekennzeichnet, dass** der Exzenter (47) über eine Drehachse (49) mit der Endplatte (30, 35) verbunden ist

8. Befestigungsanordnung (100) umfassend zumindest ein Energiespeichermodul (1) nach einem der vorhergehenden Ansprüche und zumindest einen Verriegelungsbügel (44) zum Aufstecken des Energiespeichermoduls (1).

9. Befestigungsanordnung nach Anspruch 8, **dadurch gekennzeichnet, dass** der Verriegelungsbügel (44) an einem Ende (45) fest mit einer Vorrichtung (43), insbesondere einem Gehäuse oder einer Fahrzeugkarosserie, verbunden ist, wobei die Klemmfläche (48) des Verriegelungselementes (47) eine dem festen Ende (45) zugewandte Fläche des Verriegelungsbügels (44), insbesondere des Verriegelungsfortsatzes (46), untergreift.

10. Befestigungsanordnung nach einem der Ansprüche 8 oder 9, **dadurch gekennzeichnet, dass** das Verriegelungselement (47) und der Verriegelungsbügel (44), insbesondere der Verriegelungsfortsatz (46), für eine selbsthemmende Klemmung ausgebildet sind.

11. Befestigungsanordnung nach einem der Ansprüche 8 bis 10, **dadurch gekennzeichnet, dass** der Verriegelungsbügel (44) zum Aufstecken von mehreren, übereinander gestapelten Energiespeichermodulen (1) ausgebildet ist.

## Claims

1. An energy storage module (1) for an energy supply device, especially for a motor vehicle, consisting of a plurality of storage cells (10) which are braced between two end plates (30, 35) via tie anchors (40-42),
wherein the energy storage module (1) is configured to be placed and locked on at least one fixed locking bracket (44),
wherein at least one of the two end plates (30, 35) comprises a locking element (47) which is connected to the end plate (30, 35) such that it can swivel and/or be displaced, and
wherein the locking element (47) can be locked with the locking bracket (44), by a swivellable and/or displaceable movement of the locking element (47).

2. An energy storage module according to claim 1, **characterised in that** the locking element (47) comprises a clamping surface (48), the clamping surface (48) being swivellable and/or displaceable on the locking bracket (44) under a locking extension (46), especially a locking bolt.

3. An energy storage module according to any of the preceding claims, **characterised by** a spring (52) between the locking element (47) and the end plate (30, 35), the spring (52) being arranged to support the swivellable and/or displaceable movement of the locking element (47) for locking with the locking bracket (44).

4. An energy storage module according to any of the preceding claims, **characterised in that** the end plate (30, 35) comprises at least one recess (55), especially at least one through hole to insert the locking bracket (44).

5. An energy storage module according to any of the preceding claims, **characterised in that** the end plate (30, 35) is formed from two shells (53), the locking element (47) being arranged between the two shells (53).

6. An energy storage module according to any of the preceding claims, **characterised in that** the looking element (47) is configured as an eccentric.

7. An energy storage module according to claim 6, **characterised in that** the eccentric (47) is connected to the end plate (30, 35) by a pivot (49).

8. A fastening arrangement (100) comprising at least one energy storage module (1) according to any of the preceding claims and at least one locking bracket (44) for the attachment of the energy storage module (1).

9. A fastening arrangement according to claim 8, **characterised in that** the locking bracket (44) is rigidly connected at one end (45) to a device (43), especially to a housing or to a vehicle body, the clamping surface (48) of the locking element (47) engaging under a surface, facing the fixed end (45), of the locking bracket (44), especially of the locking extension (46).

10. A fastening arrangement according to any of claims 8 or 9, **characterised in that** the locking element (47) and the locking bracket (44), especially the locking extension (46) are configured to provide a self-locking clamping.

11. A fastening arrangement according to any of claims 8 to 10, **characterised in that** the locking bracket (44) is configured for the attachment of a plurality of energy storage modules (1) which are stacked on top of one another.

## Revendications

1. Module accumulateur d'énergie (1) destiné à un dispositif d'alimentation en tension, en particulier d'un véhicule automobile constitué de plusieurs cellules d'accumulation (10) qui sont serrées entre deux plaques d'extrémité (30, 35) par l'intermédiaire de tirants (40, 42),
- ce module accumulateur d'énergie (1) étant réalisé pour être enfiché et verrouillé sur au moins un étrier de verrouillage rigide (44),
- au moins l'une des deux plaques d'extrémité (30, 35) comprenant un élément de verrouillage (47) relié avec cette plaque d'extrémité (30, 35) en étant mobile en pivotement et/ou en coulissement, et
- le déplacement par pivotement et/ou par coulissement de l'élément de verrouillage (47), permet de verrouiller l'élément de verrouillage (47) avec l'étrier de verrouillage (44).

2. Module accumulateur d'énergie conforme à la revendication 1,
**caractérisé en ce que**
l'élément de verrouillage (47) comprend une surface de blocage (48), cette surface de blocage (48) pouvant être déplacée par pivotement et/ou par coulissement sur l'étrier de verrouillage (44) au-dessous d'un prolongement de verrouillage (46), en particulier d'un goujon de verrouillage.

3. Module accumulateur d'énergie conforme à l'une des revendications précédentes,
**caractérisé en ce qu'**
il est prévu un ressort (52) entre l'élément de verrouillage (47) et la plaque d'extrémité (30, 35), ce ressort (52) étant monté pour permettre d'assister le mouvement de pivotement et/ou de coulissement de l'élément de verrouillage (47) de façon à permettre le verrouillage avec l'étrier de verrouillage (44).

4. Module accumulateur d'énergie conforme à l'une des revendications précédentes,
**caractérisé en ce que**
la plaque d'extrémité (30, 35) comporte au moins un évidement (55), en particulier au moins un perçage traversant pour permettre l'introduction de l'étrier de verrouillage (44).

5. Module accumulateur d'énergie conforme à l'une des revendications précédentes,
**caractérisé en ce que**
la plaque d'extrémité (30, 35) est formée de deux coques (53), l'élément de verrouillage (47) étant positionné entre ces deux coques (53).

6. Module accumulateur d'énergie conforme à l'une des revendications précédentes,
**caractérisé en ce que**
l'élément de verrouillage (47) est réalisé sous la forme d'une came.

7. Module accumulateur d'énergie conforme à la revendication 6,
**caractérisé en ce que**
la came (47) est reliée à la plaque d'extrémité (30, 35) par l'intermédiaire d'un axe de rotation (49).

8. Dispositif de fixation (100) comprenant au moins un module accumulateur d'énergie (1) conforme à l'une des revendications précédentes et au moins un étrier de verrouillage (44) pour permettre l'enfichage de ce module accumulateur d'énergie (1).

9. Dispositif de fixation conforme à la revendication 8,
**caractérisé en ce que**
l'étrier de verrouillage (44) est relié solidairement à l'une de ses extrémités (45) avec un dispositif (43), en particulier un boîtier ou une carrosserie de véhicule, la surface de blocage (48) de l'élément de verrouillage (47) venant en prise en dessous d'une surface tournée vers l'extrémité fixe (45), de l'étrier de verrouillage (44), en particulier du prolongement de verrouillage (46).

10. Dispositif de fixation conforme à l'une des revendications 8 et 9,
**caractérisé en ce que**
l'élément de verrouillage (47) et l'étrier de verrouillage (44), en particulier le prolongement de verrouillage (46) sont réalisés pour permettre un blocage automatique.

11. Dispositif de fixation conforme à l'une des revendications 8 à 10,
**caractérisé en ce que**
l'étrier de verrouillage (44) est réalisé pour permettre l'enfichage de plusieurs modules accumulateurs d'énergie (1) empilés les uns sur les autres.
